# EUROPÄISCHE PATENTSCHRIFT

(11) **EP 1 078 833 B1**
(45) Veröffentlichungstag und Bekanntmachung des Hinweises auf die Patenterteilung: **16.11.2005**
(21) Anmeldenummer: 00118540.4
(22) Anmeldetag: 25.08.2000
(51) Int. Cl.: B60T 8/48, B60T 8/40, B60T 13/68

(54) **Bremsanlage für Kraftfahrzeuge und Verfahren zum Betreiben einer Bremsanlage**
Braking system for motor vehicles and method for operating a braking system
Système de freinage pour véhicule automobile et procédé de fonctionnement d'un système de freinage

(30) Priorität: 25.08.1999 DE 19940255; 02.03.2000 DE 10010242
(43) Veröffentlichungstag der Anmeldung: 28.02.2001
(73) Patentinhaber: Continental Teves & Co. oHG, 60488 Frankfurt am Main (DE)
(72) Erfinder: Drumm, Stefan A., 55291 Saulheim (DE)

(56) Entgegenhaltungen:
- WO-A-97/22504
- DE-A- 2 121 650
- DE-A- 19 703 776
- US-A- 3 751 919
- US-A- 3 946 564
- US-A- 4 034 566
- US-A- 4 489 555
- US-A- 5 927 827

## Beschreibung

Die Erfindung betrifft eine Bremsanlage für Kraftfahrzeuge und ein Verfahren zum Betreiben dieser Bremsanlage, wobei die Bremsanlage einen Hauptzylinder, an den Radbremszylinder anschließbar sind, einen ersten Kolben, der mit einem Bremspedal gekoppelt ist, einen zweiten Kolben, der den Hauptzylinder betätigt, einen dritten Kolben, der vom ersten Kolben betätigbar ist, wobei zwischen dem ersten und dem dritten Kolben mindestens ein elastisches Element vorgesehen ist, und alle drei Kolben in einem Gehäuse angeordnet sind, und eine hydraulische Druckquelle aufweist, und wobei der zweite und der dritte Kolben durch einen Zwischenraum voneinander getrennt sind, so dass der dritte Kolben durch einen den zweiten Kolben beaufschlagenden Druck in der der Beaufschlagungsrichtung des zweiten Kolbens entgegengesetzten Richtung beaufschlagt wird, wobei die hydraulische Druckquelle durch einen Hochdruckspeicher gebildet wird, der von einer motorgetriebenen Pumpe gespeist wird, und wobei eine Ventileinrichtung vorgesehen ist, die zum Reduzieren des Drucks der Druckquelle auf einen an den Zwischenraum abgegebenen Wert dient, mit dem der zweite Kolben beaufschlagbar ist, und wobei der dritte Kolben mit einem im Gehäuse ausgebildeten Anschlag zusammenwirkt, gegen den der dritte Kolben durch den im Zwischenraum herrschenden Druck oder eine durch mechanischen Kontakt vom zweiten Kolben ausgeübte Kraft angedrückt wird.

In der Kraftfahrzeugtechnik finden Brake-by-Wire-Bremssysteme eine immer größere Verbreitung. Bei diesen Bremssystemen kann die Bremse auch ohne aktives Zutun des Fahrers aufgrund elektronischer Signale "fremd-" betätigt werden. Diese elektronischen Signale können beispielsweise von einem elektronischen Stabilitätsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal. Dieser Rückwirkungseffekt auf das Bremspedal kann für den Fahrer ungewohnt und unangenehm sein, so dass der Fahrer in einer kritischen Situation des Straßenverkehrs das Bremspedal nicht so stark betätigt wie es in dieser Situation notwendig wäre, da er durch die von der Fremdbetätigung der Bremse verursachte Rückwirkung auf das Bremspedal irritiert wird.

Eine Bremsanlage für Kraftfahrzeuge ist aus der US 4,034,566 A bekannt. Bei der vorbekannten Bremsanlage ist die auf das Bremspedal bei der Betätigung ausgeübte Reaktionskraft proportional zu dem auf den zweiten und den dritten Kolben wirkenden Druck. Wenn jedoch diese Bremsanlage mit der Hydraulikeinheit eines modernen Antiblockier- oder Fahrstabilitätsregelsystems, das auf dem Rückförderprinzip basiert, kombiniert würde, könnte dies in bestimmten Situationen zu einer Verfälschung der Bremspedalcharakteristik führen.

Eine Bremsanlage für Kraftfahrzeuge der eingangs genannten Gattung ist aus der US 3,946,564 A bekannt. Bei dieser Bremsanlage wird die Ventileinrichtung, die zum Reduzieren des vom Hochdruckspeicher bereit gestellten Druckes dient, durch am dritten Kolben ausgebildete hydraulische Steuerkanten gebildet. Bei einem Ausfall des Hochdruckspeichers wird die gesamte Betätigungskraft durch den dritten Kolben übertragen. Eine derartige Belastung ist insbesondere einem hochpräzisen Bauteil nicht zuträglich.

Beiden genannten Veröffentlichungen sind jedoch keine Maßnahmen zu entnehmen, die eine von der Bremspedalbetätigung entkoppelte ("Brake-by-wire-) Ansteuerung der darin offenbarten Bremsanlagen ermöglichen würden.

Aufgabe der vorliegenden Erfindung ist es, eine Bremsanlage und ein Verfahren zu deren Betätigung zu schaffen, die bei einem einfachen Aufbau und kostengünstiger Herstellung eine Brake-by-wire-Betriebsart ohne Bremspedalrückwirkung ermöglichen.

Diese Aufgabe wird erfindungsgemäß dadurch gelöst, dass eine mittels einer elektronischen Steuereinheit elektrisch betätigbare zweite Ventileinrichtung vorgesehen sein, mit der der im Zwischenraum vorliegende Druck beeinflussbar ist.

Der erste Kolben kann mit einem am dritten Kolben ausgebildeten Anschlag zusammenwirken, wobei bei unbetätigtem Bremspedal der erste Kolben durch die elastischen Elemente an den Anschlag angedrückt wird.

Wird der Zwischenraum mit Bremsdruck beaufschlagt, der nicht auf einer Betätigung des Bremspedals, sondern auf elektronischen Signalen, beispielsweise eines ASR- oder ESP-Systems, beruht, betätigt der zweite Kolben aufgrund des Drucks im Zwischenraum den Hauptzylinder. Der dritte Kolben wird durch den Druck im Zwischenraum gegen den Anschlag gedrückt, der am Gehäuse der Bremsanlage ausgebildet ist.
Der erste Kolben, mit dem das Bremspedal verbunden ist, wird bei unbetätigtem Pedal durch die Federkraft der elastischen Elemente gegen einen im dritten Kolben ausgebildeten Anschlag gedrückt. Das Bremspedal bleibt somit bei einer Fremdbetätigung (fremd im Sinne, dass nicht der Fahrer den Bremsdruck durch Betätigen des Bremspedals erzeugt) in seiner Ausgangsstellung und kann unabhängig vom Fremdbetätigungszustand vom Fahrer betätigt werden. Der Fahrer spürt bei gleichzeitiger Fahrer- und Fremdbetätigung der Bremse weder eine Rückwirkung im Bremspedal noch eine Veränderung der Bremspedalcharakteristik.

In einer bevorzugten Ausführungsform ist der Anschlag des dritten Kolbens als ein Betätigungselement der Ventileinrichtung ausgebildet.

Ebenso kann ein Wegsensor zum Erfassen des Bremspedalweges bzw. des Betätigungsweges des ersten Kolbens vorgesehen sein, dessen Ausgangssignal der elektronischen Steuereinheit zugeführt wird. Ebenso kann ein Drucksensor zum Erfassen des im Zwischenraum herrschenden hydraulischen Drucks vorgesehen sein, dessen Ausgangssignal der elektronischen Steuereinheit zugeführt wird.

Außerdem können Mittel zur Überwachung des Ladezustands des Hochdruckspeichers sowie zur Steuerung der Pumpe vorgesehen sein.

In einer bevorzugten Ausführungsform begrenzt der erste Kolben im dritten Kolben eine das elastische Element aufnehmende Kammer, die mit Druckmittel gefüllt ist und die im unbetätigten Zustand der Bremsanlage mit einem Druckmittelvorratsbehälter in Verbindung steht. Die Verbindung zwischen der kammer und dem Druckmittel vorratsbehälter ist absperrbar durch die Bewegung des dritten Kolbens relativ zum Gehäuse. Wenn der dritte Kolben nach Betätigen des Bremspedals in Richtung des zweiten Kolbens bewegt wird, wird die Verbindung unterbrochen, so dass das in der Kammer vorhandene Druckmittel nicht mehr in den Druckmittelvorratsbehälter entweichen kann. In diesem Betriebszustand verhindert das in der Kammer eingeschlossene Druckmittel eine weitere Deformation der elastischen Elemente.

Ebenso kann die Verbindung zwischen der Kammer und dem Druckmittelvorratsbehälter durch die Bewegung des ersten Kolbens relativ zum dritten Kolben absperrbar sein, wobei die Kammer mit einer Simulatoranordnung verbunden ist. Die Verbindung zwischen der Kammer und der Simulatoranordnung kann hierbei mittels eines elektromagnetisch betätigbaren Ventils absperrbar sein.

Weiterhin kann ein Drucksensor zum Erfassen des in der Kammer herrschenden Druckes vorgesehen sein.

Die Aufgabe wird erfindungsgemäß ebenso durch ein Verfahren zum Betreiben der Bremsanlage gelöst, das drei verschiedene Betriebsarten enthältt wobei in einem ersten Betriebsmodus, der durch einen Ausfall der Druckquelle charakterisiert ist, der dritte Kolben den zweiten Kolben mechanisch betätigt. In diesem Fall liegt kein hydraulischer Druck vor und das Fremdkraftmodul ist außer Funktion. Der dritte Kolben bewegt sich unter Einfluss einer Bremspedalbetätigung von einer Anschlagstellung an der Ventilbetätigung weg und verschiebt den zweiten Kolben durch mechanischen Kontakt. In diesem Fall erfolgt die Betätigung des Hauptzylinders ausschließlich durch die vom Fahrer über das Bremspedal eingeleitete Kraft.

Die Bremsanlage kann in einem zweiten Betriebsmodus betrieben werden, in dem die Ventileinrichtung den Druck der Druckquelle auf einen Wert reduziert, der an den Zwischenraum abgegeben wird und mit dem der zweite Kolben beaufschlagbar ist. Diese Betriebsart ist automatisch aktiv, solange der Hochdruckspeicher unter Druck stehendes Druckmittel, z.B. Hydraulikflüssigkeit abgeben kann und keines der Elektromagnetventile der zweiten Ventileinrichtung bestromt wird. In dieser Hydraulikverstärker-Betriebsart liegt eine lineare Kraftverstärkung vor, deren Verstärkungsfaktor durch das Verhältnis der Querschnittsfläche des zweiten Kolbens zur Querschnittsfläche des dritten Kolbens fest vorgegeben ist. Dieser zweite Betriebsmodus arbeitet mit einer unterlagerten hydraulischen Wegregelung, die den dritten Kolben in unmittelbarer Nähe seines Anschlags hält. Dieser Betriebsmodus funktioniert abgesehen von einem möglichen elektrischen Antrieb der Druckversorgungspumpe auch ohne Elektrizität.

In einem dritten Betriebsmodus der Bremsanlage wird der von der Druckquelle an den Zwischenraum abgegebene Druck mit Hilfe der zweiten Ventileinrichtung auf einen gegenüber dem zweiten Betriebsmodus erhöhten Wert geregelt. Der dritte Betriebsmodus wird zur elektronischen Regelung von Bremsvorgängen verwendet. In dieser Betriebsart wird die zweite Ventileinrichtung so angesteuert, dass der Druck in der Betätigungskammer einem fortlaufend neu berechneten Sollwert nachgeführt wird. Dazu kann durch Bestromen eines Trennventils der Volumenstrom von der Betätigungskammer in das hydromechanische Verstärkerventil unterbunden werden, die Möglichkeit des umgekehrten Volumenstroms von der Ventileinrichtung zum Druckaufbau in der Betätigungskammer bleibt jedoch erhalten. Dies stellt sicher, daß der Betätigungsdruck unabhängig von den Aktivitäten der elektronischen Druckregelung nicht unter den über den zweiten Betriebsmodus definierten, vom Fahrer vorgegebenen und hydraulisch verstärkten Druck fallen kann. Im dritten Betriebsmodus kann über ein Druckaufbauventil elektronisch gesteuert ein höherer Betätigungsdruck eingestellt werden, als der, den die erste Ventileinrichtung, beispielsweise ein hydromechanisches Verstärkerventil, vorgeben würde. Im Zwischenraum wirkt daher stets das Maximum aus elektronisch geregeltem Betätigungsdruck und durch den Fahrer vorgegebenem, linear verstärktem Druck.

Die erfindungsgemäße Bremsanlage wird vorzugsweise im dritten Betriebsmodus betrieben, in dem der Betätigungsdruck elektronisch geregelt wird. Dadurch ist das Übertragungsverhalten des Bremssystems von der Fahrervorgabe zur Bremswirkung im Rahmen der technischen Gegebenheiten frei wählbar. Daher können eine sogenannte Springerfunktion (das Springen auf einen vorgegebenen Bremsdruckwert beim Antippen des Bremspedals), eine Bremsassistentenfunktion, eine Verzögerungsregelung und ein autonomes Bremsen, wie es beispielsweise für ASR, ESP und ACC benötigt wird, durch Softwaremaßnahmen realisiert werden. Dazu wird die Fahrervorgabe in Form einer Bremspedalbetätigung, die durch Weg-, Kraft oder sonstige Sensoren erfaßt wird, von einer Recheneinheit durch Anwendung geeigneter Algorithmen mit einer eventuellen Anforderung einer autonomen Bremsung verknüpft und in Radbremsdrücke umgerechnet, die mit Hilfe der elektronisch schaltbaren Ventile im Fremdkraft- Bremsmodul und der nachgeschalteten ABS- Hydraulik realisiert werden.

Im folgenden werden Beispiele der Ausführungsformen der Erfindung unter Bezugnahme auf die beiliegenden schematischen Zeichnungen näher erläutert. Es zeigen:
- Fig. 1: den Aufbau der erfindungsgemäßen Bremsanlage gemäß einer ersten Ausführungsform,
- Fig. 2: den Aufbau einer zweiten erfindungsgemäßen Ausführungsform der Bremsanlage, und
- Fig. 3: eine dritte erfindungsgemäße Ausführungsform der Bremsanlage.

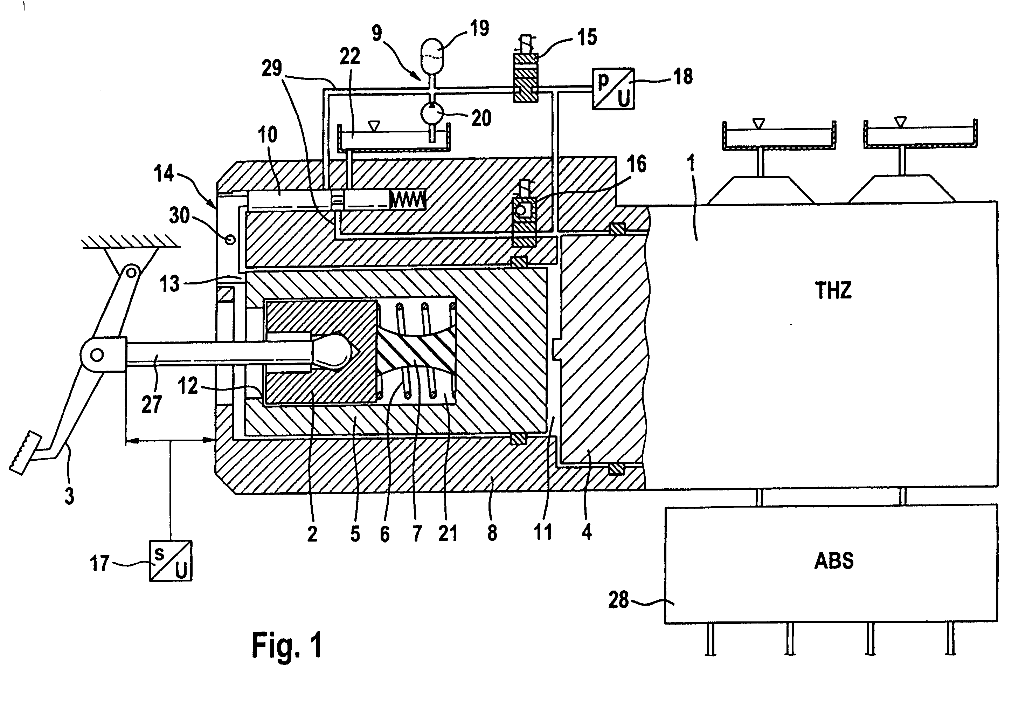

Figur 1 zeigt die erfindungsgemäße Bremsanlage. Die Bremsanlage weist ein Bremspedal 3 auf, das über eine Betätigungsstange 27 mit einem ersten Kolben 2 fest verbunden ist. Der Bremspedalweg kann über einen Wegsensor 17 erfaßt werden. Der erste Kolben 2 ist in einem dritten Kolben 5 angeordnet, wobei zwischen dem ersten und dem dritten Kolben eine Kammer 21 angeordnet ist, in der elastische Elemente 6, 7 eine Kopplung zwischen dem ersten und dem dritten Kolben bewirken.

Weiterhin ist ein zweiter Kolben 4 vorgesehen, der einen Hauptzylinder 1 betätigt. Der Hauptzylinder 1 kann über ein steuerbares ABS- System 28 an die Radbremsen angeschlossen sein.

Der erste, zweite und dritte Kolben sind in einem Gehäuse 8 untergebracht. Zwischen dem dritten Kolben 5 und dem zweiten Kolben 4 befindet sich ein Zwischenraum 11, der mit Druckmittel befüllbar ist. Die Steuerung des Drucks in dem Zwischenraum 11 geschieht im zweiten Betriebsmodus auf folgende Weise: Der Fahrer bewegt bei Betätigung des Bremspedals 3 den ersten Kolben 2 entgegen der Federkraft der elastischen Elemente 6 und 7. Die elastischen Elemente 6 und 7 sind so ausgeführt, daß sie dem Fahrer das Bremsgefühl vermitteln, das einer üblichen Bremspedalcharakteristik entspricht. Dies bedeutet, daß bei geringem Bremspedalweg der Widerstand langsam ansteigt und bei größerem Bremspedalweg überproportional zunimmt. Durch Betätigen des Bremspedals 3 kann nun auch der dritte Kolben 5 in Richtung des zweiten Kolbens bewegt werden, wodurch bereits nach einem sehr geringen Verfahrweg eine Ventileinrichtung 10, beispielsweise ein hydromechanisches Verstärkerventil, über ein Betätigungselement 14 betätigt wird, das in der dargestellten Ausführungsform um eine Drehachse 30 drehbar gelagert ist. Andere Ausführungsformen, wie beispielsweise eine direkte Betätigung der Ventileinrichtung ohne Zuhilfenahme eines Hebels sind möglich. Bewegt sich der dritte Kolben 5 ein wenig in Richtung des zweiten Kolbens 4, wird die Ventileinrichtung 10 so geschaltet, daß eine Verbindung 29 zwischen dem Zwischenraum 11 und einer hydraulischen Druckquelle 9, die durch einen Hochdruckspeicher 19 gebildet ist, der von einer motorgetriebenen Pumpe 20 gespeist wird, hergestellt wird. Die Pumpe 20 ist wiederum mit einem Druckmittelvorratsbehälter 22 verbunden. Der Hochdruckspeicher 19 unterstützt die Pumpe 20 vor allem in den Fällen, in denen beispielsweise bei einer schnellen Vollbremsung in kurzer Zeit Druck aufgebaut werden muß, den die Pumpe aufgrund ihrer Massenträgheit nicht sofort bereitstellen kann. Über die Verbindung 29 wird der Zwischenraum 11 mit Druck beaufschlagt, wodurch der zweite Kolben den Hauptzylinder 1 betätigt, und der dritte Kolben 5 wieder in Richtung eines Anschlags 13 am Betätigungselement 14 gedrückt wird, an dem der dritte Kolben 5 vor Betätigen der Bremse anlag. Ein Ventil 15, ein Druckaufbauventil, ist im unbestromten Zustand geschlossen und ein Ventil 16, in der dargestellten Ausführungsform ein Trennventil, ist im unbestromten Zustand geöffnet, so daß die Pumpe 20 beziehungsweise der Hochdruckspeicher 19 den Zwischenraum 11 über die Verbindung 29 mit Druck beaufschlagen kann. Ein Drucksensor 18 kann den in dem Zwischenraum 11 vorliegenden Druck erfassen. In dem später näher ausgeführten ersten und zweiten Betriebsmodus sind die beiden Ventile 15, 16 unbestromt und wie in Fig. 1 dargestellt geschaltet. Im dritten Betriebsmodus kann durch Bestromen des Trennventils 16 ein Abfließen von Druckmittel aus dem Zwischenraum 11 über die Ventileinrichtung 10 unterbunden, und durch Bestromen des Druckaufbauventils 15 kann dem Zwischenraum 11 Druckmittel zugeführt werden.

Im unbetätigten Zustand des Bremspedals wird der erste Kolben über die elastischen Elemente 6 und 7 gegen einen Anschlag 12 angedrückt, der im dritten Kolben 5 ausgebildet ist. Der Fahrer empfindet im zweiten und dritten Betriebsmodus bei Betätigung des Bremspedals 3 eine Bremspedalcharakteristik, die durch die elastischen Elemente 6 und 7 vorgegeben ist.

Im ersten Betriebsmodus, der durch das Fehlen eines hydraulischen Drucks im Druckspeicher 19 charakterisiert ist, kann die Bremsanlage rein mechanisch betätigt werden, der dritte Kolben 5 bewegt sich unter Einfluß einer Bremspedalbetätigung von seinem Anschlag 13 weg und verschiebt den zweiten Kolben 4 durch mechanischen Kontakt. Die Betätigung des Hauptzylinders 1 erfolgt ausschließlich mit Muskelkraft.

Im zweiten Betriebsmodus, d.h. in einer Hydraulikverstärker- Betriebsart, bleiben die elektromagnetischen Ventile 15 und 16 der zweiten Ventileinrichtung unbestromt. Dadurch kann die Ventileinrichtung 10, das hydromechanische Verstärkerventil, den Betätigungsdruck im Zwischenraum 11 regeln und so eine Bremskraftverstärkung bewirken. Die hydraulische Verstärkung funktioniert ohne Elektrizität, solange der Hochdruckspeicher unter Druck stehende Hydraulikflüssigkeit abgeben kann. Es liegt eine lineare Kraftverstärkung vor, deren Verstärkungsfaktor durch das Verhältnis der Querschnittsflächen von zweitem Kolben 4 zu drittem Kolben 5 fest vorgegeben ist.

Im dritten Betriebsmodus wird durch Ansteuern der zweiten Ventileinrichtung 16 der Betätigungsdruck im Zwischenraum 11 einem fortlaufend neu berechneten Solldruckwert nachgeführt. Dazu kann durch Bestromen des Trennventils 16 der Volumenstrom zur Ventileinrichtung 10 unterbunden werden, die Möglichkeit des umgekehrten Volumenstroms von der ersten Ventileinrichtung 10 durch das Trennventil 16 zum Druckaufbau im Zwischenraum 11 bleibt erhalten. Über das Druckaufbauventil 15 kann elektronisch gesteuert ein höherer Betätigungsdruck eingestellt werden als der, den das hydromechanische Verstärkerventil, die Ventileinrichtung 10, vorgeben würde. Zum elektronisch gesteuerten Druckabbau wird die Bestromung des Trennventils 16 vorübergehend ausgesetzt, so daß Druckmittel zur ersten Ventileinrichtung 10 abfließen kann, die in diesem Betriebszustand eine Verbindung zum Druckmittelvorratsbehälter 22 aufweist. Diese elektronische Betätigungsdruck- Regelung hat den Vorteil, daß ihr Übertragungsverhalten im Rahmen der durch die technischen Daten von Druckspeicher, Druckaufbau- und Trennventil gegebenen Dynamik frei wählbar ist. Daher können eine sogenannte Springerfunktion, d.h. das Springen auf einen vorgegebenen Bremsdruckwert beim Antippen des Bremspedals 3, eine Bremsassistentenfunktion, eine Verzögerungsregelung und ein autonomes Bremsen, wie es beispielsweise für ASR (Antriebs- Schlupf Regelung), ESP (Elektronisches Stabilitäts- Programm) und ACC (Adaptive Cruise Control) benötigt wird, durch Softwaremaßnahmen realisiert werden. Hierfür wird die Fahrervorgabe in Form einer Bremspedalbetätigung, die durch Weg-, Kraft- oder sonstige Sensoren erfaßt wird, von einer nicht dargestellten Recheneinheit durch Anwendung geeigneter Algorithmen in Radbremsdrücke umgerechnet, die mit Hilfe der elektronisch schaltbaren Ventile im Fremdkraft- Bremsmodul und der nachgeschalteten ABS- Hydraulik realisiert werden.

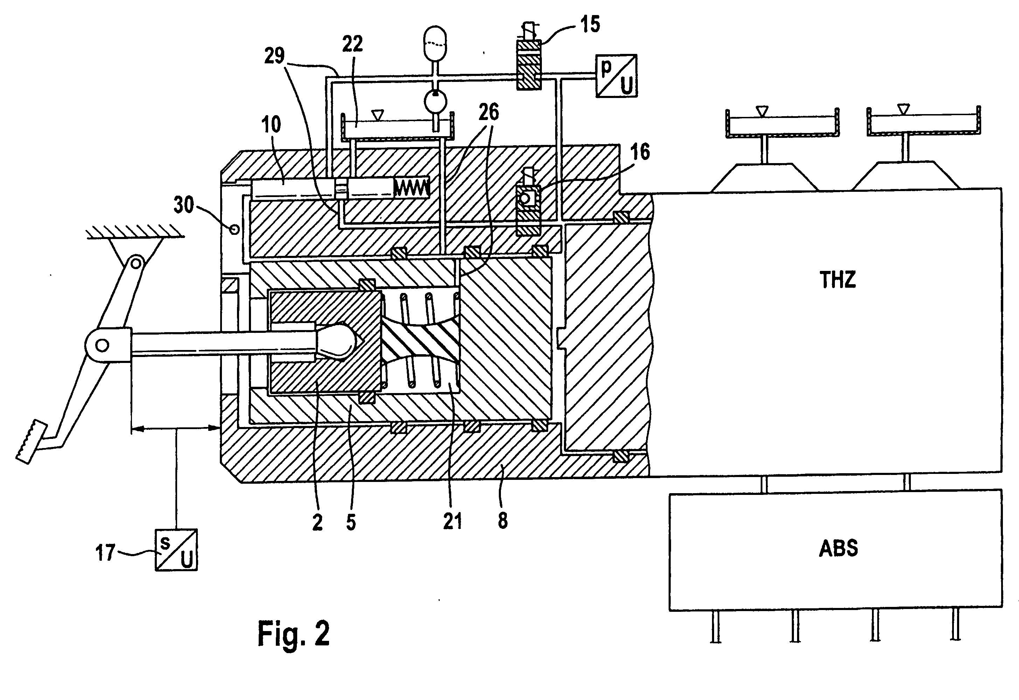

In Figur 2 ist eine weitere erfindungsgemäße Ausführungsform dargestellt, in der der die elastischen Elemente 6, 7 aufnehmende Zwischenraum 21 im Gegensatz zur Ausführungsform von Figur 1 zusätzlich mit einem Druckmedium gefüllt ist. Kammer 21 ist über die Verbindung 26 mit dem Druckmittelvorratsbehälter 22 verbunden, so daß in der ersten Betriebsart bei leichter Betätigung des Bremspedals 3 der erste Kolben 2 in Richtung des Hauptzylinders verschoben wird. Hat hierbei der dritte Kolben 5 bei Betätigung des Bremspedals 3 einen gewissen Verfahrweg im Gehäuse 8 zurückgelegt, wird die Verbindung 26 unterbrochen. Das Nachgeben der elastischen Elemente 6, 7, das im zweiten und dritten Betriebsmodus zur Darstellung der Bremspedalcharakteristik dient, wird durch das eingeschlossene Druckmedium, die Hydraulikflüssigkeit, gestoppt. Dadurch steht im ersten Betriebsmodus der volle Bremspedalweg zur Betätigung des Hauptzylinders 1 zur Verfügung.

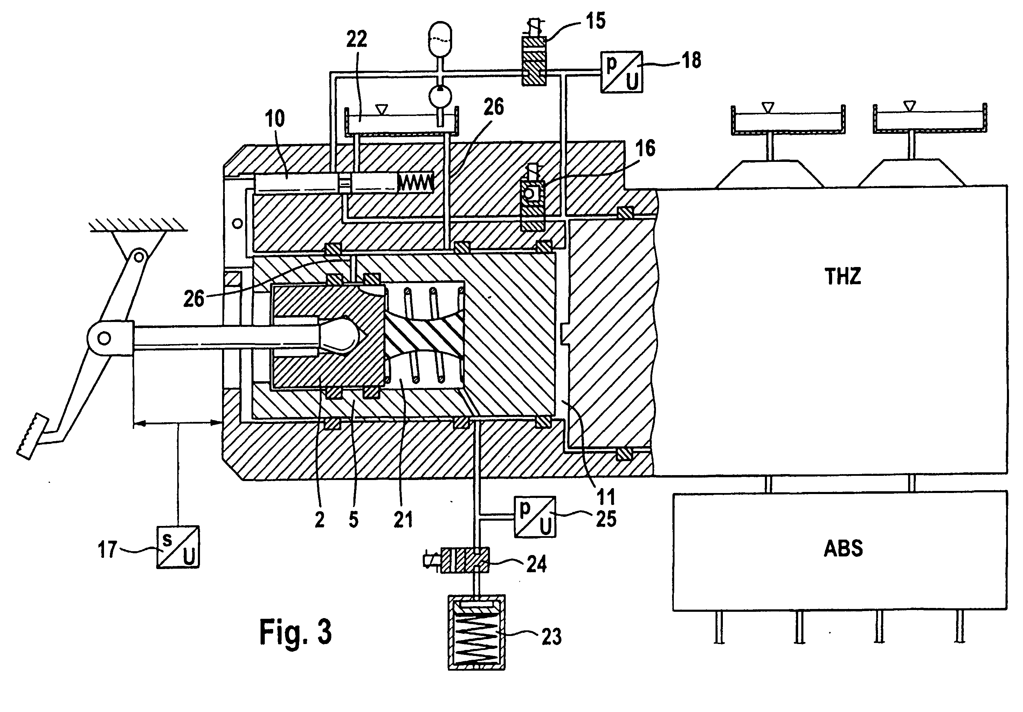

In Figur 3 wird eine dritte Ausführungsform beispielhaft erklärt. Die Kammer 21 ist wiederum mit Hydraulikflüssigkeit gefüllt und ist mit einer Simulatoranordnung 23 hydraulisch verbunden. Ein elektromagnetisch betätigbares Ventil 24 kann die Verbindung zwischen Kammer 21 und Simulatoranordnung 23 freigeben. Über die Druck- Volumenaufnahme- Charakteristik der Simulatoranordnung 23 wird zusammen mit den elastischen Elementen 6, 7 im zweiten und dritten Betriebsmodus die Bremspedalcharakteristik dargestellt. Durch den Einsatz hydraulischer Blenden insbesondere im Durchlaßquerschnitt des Ventils 24 kann eine Dämpfung der Pedalbewegung erzielt werden. Im ersten Betriebsmodus kann das Ventil 24 gesperrt werden, wodurch die Verbindung zwischen Kammer 21 und Simulatoranordnung 23 unterbrochen wird, so daß auch hier der volle Bremspedalweg zur Betätigung des Hauptzylinders 1 zur Verfügung steht.

Weiterhin ist die Kammer 21 zum Ausgleich temperaturbedingter Volumenänderungen im unbetätigten Zustand des Bremspedals 3 über die Verbindung 26 mit dem Druckmittelvorratsbehälter 22 verbunden. Beim Betätigen des Bremspedals 3 und einem Verschieben des ersten Kolbens 2 relativ zum dritten Kolben 5 wird die Verbindung 26 unterbrochen, so daß die Simulatoranordnung 23 mit Druckmittel beaufschlagt wird.

Besonders vorteilhaft ist an der dritten Ausführungsform, daß die vom Fahrer auf das Pedal ausgeübte Kraft über einen Drucksensor 25 erfaßt werden kann.

Durch die vorliegende Erfindung wird eine einfach aufgebaute Bremsanlage erreicht, bei der die Bremspedalcharakteristik nicht vom Betätigungszustand der restlichen Bremsanlage abhängt, wodurch das Pedalgefühl bei einer Fahrerbremsung durch das gleichzeitige Vorliegen einer Fremdbremsung nicht durch Rückwirkungen gestört werden kann.

Die Bremsanlage hat weiterhin den Vorteil, daß sie in einem bevorzugten dritten Betriebsmodus betrieben werden kann, in dem der Betätigungsdruck elektronisch geregelt wird und diese Betriebsebene durch zwei gestaffelte Rückfallebenen, die Betriebsmodi zwei und eins, gegen ein Versagen abgesichert ist, wobei bei einem Ausfall der elektronischen Druckregelung die Grundfunktion der Bremse inklusive einer hydromechanischen Bremskraftverstärkung durch automatischen Rückfall in den zweiten Betriebsmodus erhalten bleibt und bei einem Ausfall der hydromechanischen Verstärkung die Bremsanlage durch automatischen Rückfall in den ersten Betriebsmodus unverstärkt das heißt mit Muskelkraft betrieben werden kann.

Weiterhin hat die erfindungsgemäße Bremsanlage den Vorteil, daß sie einfacher aufgebaut ist als herkömmliche Bremsanlagen. Fahrzeuge mit einer ESP- Funktion benötigen beispielsweise eine spezielle ESP- Hydraulik, die komplizierter ist als eine normale ABS- Hydraulik, da sie im Gegensatz zur ABS- Hydraulik auch die Fähigkeit zum Aufbau von Radbremsdrücken oberhalb des Hauptzylinderdrucks besitzen muß.

Bei Fahrzeugen mit erfindungsgemäßer Bremsanlage ist eine spezielle ESP- Hydraulik überflüssig - die erfindungsgemäße Fremdbremshydraulik in Verbindung mit einem herkömmlichen ABS- System erbringt eine weit bessere Funktion. Es werden weniger elektromagnetisch betätigbare Ventile benötigt als für eine ESP- Hydraulik. Außerdem weist die erfindungsgemäße Bremsanlage eine bessere Energiebilanz und eine geringere Geräuschentwicklung auf, als eine herkömmliche ESP- Hydraulik, weil das dort im ESP- Betrieb erforderliche Umpumpen von Bremsflüssigkeit zum Erzeugen von Staudruck an einem Druckbegrenzungsventil entfällt.

## Patentansprüche

1. Bremsanlage für Kraftfahrzeuge mit
- einem Hauptzylinder (1), an den Radbremszylinder anschließbar sind,
- einem ersten Kolben (2),der mit einem Bremspedal (3) gekoppelt ist,
- einem zweiten Kolben (4), der den Hauptzylinder (1) betätigt,
- einem dritten Kolben (5), der vom ersten Kolben (2) betätigbar ist, wobei zwischen dem ersten (2) und dem dritten Kolben (5) mindestens ein elastisches Element (6,7) vorgesehen ist und alle drei Kolben (2,4,5) in einem Gehäuse (8) angeordnet sind,
- mit einer hydraulischen Druckquelle (9),
- wobei der zweite (4) und der dritte Kolben (5) durch einen Zwischenraum (11) voneinander getrennt sind, so dass der dritte Kolben (5) durch den den zweiten Kolben (4) beaufschlagenden Druck in der der Beaufschlagungsrichtung des zweiten Kolbens (4) entgegengesetzten Richtung beauf schlagt wird,
- wobei die hydraulische Druckquelle durch einen Hochdruckspeicher (19) gebildet wird, der von ei ner motorangetriebenen Pumpe (20) gespeist wird, und eine Ventileinrichtung (10) vorgesehen ist, die zum Reduzieren des Drucks der Druckquelle (9) auf einen an den Zwischenraum (11) abgegebenen Wert dient, mit dem der zweite Kolben (4) beaufschlagbar ist,
- und wobei der dritte Kolben (5) mit einem im Gehäuse ausgebildeten Anschlag (13) zusammenwirkt, gegen den der dritte Kolben durch den im Zwischenraum herrschenden Druck oder eine durch mechanischen Kontakt vom zweiten Kolben (4) ausgeübte Kraft angedrückt wird, **dadurch gekennzeichnet, dass** eine mittels einer elektronischen Steuereinheit elektrisch betätigbare zweite Ventileinrichtung (15,16) vorgesehen ist, mit der der in den Zwischen raum (11) einzuspeisende Druck beeinflussbar ist.

2. Bremsanlage nach Anspruch 1, **dadurch gekennzeichnet, dass** der erste Kolben (2) mit einem am dritten Kolben (5) ausgebildeten Anschlag (12) zusammenwirkt und bei unbetätigtem Bremspedal (3) durch das elastische Element (6,7) an diesen angedrückt wird.

3. Bremsanlage nach Anspruch 1 oder 2, **dadurch gekennzeichnet, dass** der Anschlag (13) des dritten Kolbens (5) als ein Betätigungselement (14) der Ventileinrichtung (10) ausgebildet ist.

4. Bremsanlage nach einem der Ansprüche 1 bis 3, **dadurch gekennzeichnet, dass** ein Wegsensor (17) zum Erfassen des Bremspedalweges bzw. des Betätigungsweges des ersten Kolbens (2) vorgesehen ist, dessen Ausgangssignal der elektronischen Steuereinheit zugeführt wird.

5. Bremsanlage nach einem der Ansprüche 1 bis 4, **dadurch gekennzeichnet, dass** ein Drucksensor (18) zum Erfassen des im Zwischenraum (11) herrschenden hydraulischen Druckes vorgesehen ist, dessen Ausgangssignal der elektronischen Steuereinheit zugeführt wird.

6. Bremsanlage nach einem der Ansprüche 1 bis 5,**dadurch gekennzeichnet, dass** Mittel zur Überwachung des Ladezustands des Hochdruckspeichers (19) sowie zur Steuerung der Pumpe (20) vorgesehen sind.

7. Bremsanlage nach einem der vorhergehenden Ansprüche, **dadurch gekennzeichnet, dass** der erste Kolben (2) im dritten Kolben (5) eine das elastische Element (6,7) aufnehmende Kammer (21) begrenzt, die mit Druckmittel gefüllt ist und die im unbetätigten Zustand der Bremsanlage mit einem Druckmittelvorratsbehälter (22) in Verbindung steht.

8. Bremsanlage nach Anspruch 7, **dadurch gekennzeichnet, dass** die Verbindung (26) zwischen der Kammer (21) und dem Druckmittelvorratsbehälter (22) durch eine Bewegung des dritten Kolbens (5) relativ zum Gehäuse (8) absperrbar ist.

9. Bremsanlage nach Anspruch 7, **dadurch gekennzeichnet, dass** die Verbindung (26) zwischen der Kammer (21) und dem Druckmittelvorratsbehälter (22) durch eine Bewegung des ersten Kolbens (2) relativ zum dritten Kolben (5) absperrbar ist, wobei die Kammer (21) mit einer Simulatoranordnung (23) verbunden ist.

10. Bremsanlage nach Anspruch 9, **dadurch gekennzeichnet, dass** die Verbindung (26) zwischen der Kammer (21) und der Simulatoranordnung (23) mittels eines elektromagnetisch betätigbaren Ventils (24) absperrbar ist.

11. Bremsanlage nach Anspruch 9 oder 10, **dadurch gekennzeichnet, dass** ein Drucksensor (25) zum Erfassen des in der Kammer (21) herrschenden Druckes vorgesehen ist.

12. Verfahren zum Betreiben einer Bremsanlage nach einem der vorhergehenden Ansprüche 1 bis 11, bei dem:
a) in einem ersten Betriebsmodus bei Ausfall der Druckquelle der dritte Kolben (5) den zweiten Kolben (4) mechanisch betätigt,
**dadurch gekennzeichnet, dass**
b) in einem zweiten Betriebsmodus die Ventilein richtung (10) den Druck der Druckquelle (19) auf einen Wert reduziert, der an den Zwischen raum (11) abgegeben wird und mit dem der zweite Kolben (4) beaufschlagbar ist, und
c) in einem dritten Betriebsmodus der von der Druckquelle (19) an den Zwischenraum (11) abgegebene Druck durch die zweite Ventileinrichtung (15,16) auf einen gegenüber dem zweiten Betriebsmodus erhöhten Wert geregelt wird.

13. Verfahren nach Anspruch 12, **dadurch gekennzeichnet, dass** der dritte Betriebsmodus bei elektronisch geregelten Bremsvorgängen verwendet wird.

## Claims

1. Brake system for motor vehicles comprising
- a master cylinder (1) to which wheel brake cylinders are connectable,
- a first piston (2) which is coupled to a brake pedal (3),
- a second piston (4) which actuates the master cylinder (1),
- a third piston (5) which can be actuated by the first piston (2), and at least one elastic element (6, 7) is provided between the first (2) and the third piston (5) and all three pistons (2, 4, 5) are arranged in a housing (8),
- a hydraulic pressure source (9),
- wherein the second (4) and the third piston (5) are isolated from each other by a space (11) so that the third piston (5) is acted upon by the pressure applied to the second piston (4) in the direction opposite to the application direction of the second piston (4),
- wherein the hydraulic pressure source is formed of a high-pressure accumulator (19) fed by a motor-driven pump (20), and a valve device (10) is provided which is used to reduce the pressure of the pressure source (9) to a value, said pressure being output to the space (11) and applicable to the second piston (4),
- and wherein the third piston (5) cooperates with a stop (13) designed in the housing, against which the third piston is pushed due to the pressure prevailing in the space or due to a force exerted by a mechanical contact of the second piston (4),
**characterized in that** a second valve device (15, 16) is arranged which can be operated electrically by means of an electronic control unit and which is used to influence the pressure being fed into the space (11).

2. Brake system as claimed in claim 1,
**characterized in that** the first piston (2) cooperates with a stop (12) designed on the third piston (5) and is pressed by the elastic element (6, 7) against the stop when the brake pedal (3) is not applied.

3. Brake system as claimed in claim 1 or 2,
**characterized in that** the stop (13) of the third piston (5) is configured as an actuating element (14) of the valve device (10).

4. Brake system as claimed in any one of claims 1 to 3,
**characterized in that** a travel sensor (17) for sensing the brake pedal travel or the actuating travel of the first piston (2), respectively, is provided, whose output signal is sent to the electronic control unit.

5. Brake system as claimed in any one of claims 1 to 4,
**characterized in that** a pressure sensor (18) for sensing the hydraulic pressure prevailing in the space (11) is provided, whose output signal is sent to the electronic control unit.

6. Brake system as claimed in any one of claims 1 to 5,
**characterized in that** a means for monitoring the charging condition of the high-pressure accumulator (19) and for controlling the pump (20) is provided.

7. Brake system as claimed in any one of the preceding claims,
**characterized in that** the first piston (2) in the third piston (5) confines a chamber (21) accommodating the elastic element (6, 7), said chamber being filled with pressure fluid and being in connection with a pressure fluid supply reservoir (22) in the non-actuated condition of the brake system.

8. Brake system as claimed in claim 7,
**characterized in that** the connection (26) between the chamber (21) and the pressure fluid supply reservoir (22) can be closed by a movement of the third piston (5) relative to the housing (8).

9. Brake system as claimed in claim 7,
**characterized in that** the connection (26) between the chamber (21) and the pressure fluid supply reservoir (22) can be closed by a movement of the first piston (2) relative to the third housing (5), with the chamber (21) being connected to a simulator arrangement (23).

10. Brake system as claimed in claim 9,
**characterized in that** the connection (26) between the chamber (21) and the simulator arrangement (23) can be closed by means of an electromagnetically operable valve (24).

11. Brake system as claimed in claim 9 or 10,
**characterized in that** a pressure sensor (25) is provided for sensing the pressure that prevails in the chamber (21).

12. Method of operating a brake system as claimed in any one of the preceding claims 1 to 11, wherein:
a) in a first operating mode, the third piston (5) actuates the second piston (4) mechanically upon failure of the pressure source,
**characterized in that**
b) in a second operating mode, the valve device (10) reduces the pressure of the pressure source (19) to a value, said pressure being output to the space (11) and applied to the second piston (4), and
c) in a third operating mode, the pressure output by the pressure source (19) to the space (11) is adjusted by the second valve device (15, 16) to a value that is raised compared to the second operating mode.

13. Method as claimed in claim 12,
**characterized in that** the third operating mode is used in electronically controlled brake operations.

## Revendications

1. Système de freinage pour véhicules automobiles, comprenant
- un maître-cylindre (1) auquel peuvent être reliés des cylindres de freins de roues,
- un premier piston (2) couplé à une pédale de frein (3),
- un deuxième piston (4) actionnant le maître-cylindre (1),
- un troisième piston (5) pouvant être actionné par le premier piston (2), au moins un élément élastique (6, 7) étant prévu entre les premier (2) et troisième (5) pistons, et tous les trois pistons (2, 4, 5) étant disposés dans un corps (8),
- une source de pression hydraulique (9),
- les deuxième (4) et troisième pistons (5) étant séparés l'un de l'autre par une chambre intermédiaire (11), de façon que le troisième piston (5) soit soumis à la pression agissant sur le deuxième piston (4) dans un sens opposé au sens d'application de la pression sur le deuxième piston (4),
- la source de pression hydraulique étant constituée par un accumulateur haute pression (19) alimenté par une pompe (20) mue par un moteur, et un dispositif à vannes (10) étant prévu, qui sert à réduire la pression de la source de pression (9) à une valeur communiquée à la chambre intermédiaire (11), et qui peut être appliquée au deuxième piston (4),
- et le troisième piston (5) coopérant avec une butée (13) aménagée sur le corps (13), butée contre laquelle le troisième piston est plaqué sous l'effet de la pression régnant dans la chambre intermédiaire ou sous l'effet d'une force exercée par un contact mécanique avec le deuxième piston (4),
**caractérisé en ce que**
un deuxième dispositif à vannes (15, 16) est prévu, qui peut être commandé par l'intermédiaire d'une unité de commande électronique et qui permet d'influer sur la pression acheminée vers la chambre intermédiaire (11).

2. Système de freinage selon la revendication 1, **caractérisé en ce que** le premier piston (2) coopère avec une butée (12) aménagée sur le troisième piston (5), et est mis en appui sur celle-ci par l'élément élastique (6, 7), lorsque la pédale de frein (3) n'est pas actionnée.

3. Système de freinage selon la revendication 1 ou 2, **caractérisé en ce que** la butée (13) du troisième piston (5) est configurée comme un élément d'actionnement (14) du dispositif à vannes (10).

4. Système de freinage selon l'une des revendications 1 à 3, **caractérisé en ce qu'**un capteur de déplacement (17) est prévu pour mesurer la course de la pédale de frein ou la course d'actionnement du premier piston (2), capteur dont le signal de sortie est acheminé à une unité de commande électronique.

5. Système de freinage selon l'une des revendications 1 à 4, **caractérisé en ce qu'**un capteur de pression (18) est prévu pour mesurer la pression hydraulique régnant dans la chambre intermédiaire (11), capteur dont le signal de sortie est acheminé à l'unité de commande électronique.

6. Système de freinage selon l'une des revendications 1 à 5, **caractérisé en ce que** des moyens de surveillance de l'état de charge de l'accumulateur haute pression (19) et de commande de la pompe (20) sont prévus.

7. Système de freinage selon l'une des revendications précédentes, **caractérisé en ce que** le premier piston (2) délimite une chambre (21) recevant l'élément élastique (6, 7) à l'intérieur du troisième piston (5), la chambre étant remplie de fluide de pression et étant en communication, lorsque le système de freinage n'est pas actionné, avec un réservoir (22) de fluide de pression.

8. Système de freinage selon la revendication 7, **caractérisé en ce que** la communication (26) entre la chambre (21) et le réservoir de fluide de pression (22) peut être coupée par un mouvement relatif entre le troisième piston (5) et le corps (8).

9. Système de freinage selon la revendication 7, **caractérisé en ce que** la communication (26) entre la chambre (21) et le réservoir de fluide de pression (22) peut être coupée par un mouvement relatif entre le premier piston (2) et le troisième piston (5), la chambre (21) étant reliée à un dispositif simulateur (23).

10. Système de freinage selon la revendication 9, **caractérisé en ce que** la communication (26) entre la chambre (21) et le dispositif simulateur (23) peut être coupée au moyen d'une vanne (24) à commande électromagnétique.

11. Système de freinage selon la revendication 9 ou 10, **caractérisé en ce qu'**un capteur de pression (25) est prévu pour mesurer la pression régnant dans la chambre (21).

12. Procédé d'utilisation d'un système de freinage selon l'une des revendications précédentes 1 à 11, où :
a) dans un premier mode de fonctionnement, en cas de défaillance de la source de pression, le troisième piston (5) actionne le deuxième piston (4) de façon mécanique,
**caractérisé en ce que**
b) dans un deuxième mode de fonctionnement, le dispositif à vannes (10) réduit la pression de la source de pression (19) à une valeur qui est communiquée à la chambre intermédiaire (11) et qui peut être appliquée au deuxième piston (4), et
c) dans un troisième mode de fonctionnement, la pression communiquée par la source de pression (19) à la chambre intermédiaire (11) est réglée à une valeur surélevée par rapport à celle du deuxième mode de fonctionnement, par un deuxième dispositif à vannes (15, 16).

13. Procédé selon la revendication 12, **caractérisé en ce que** le troisième mode de fonctionnement est mis en oeuvre pendant des opérations de freinage à régulation électronique.
